## Europäisches Patentamt

## European Patent Office

## Office européen des brevets

(19)

(11) Veröffentlichungsnummer: **0 135 178**
**B1**

(12) **EUROPÄISCHE PATENTSCHRIFT**

(45) Veröffentlichungstag der Patentschrift:
14.10.87

(51) Int. Cl.⁴: **B 32 B 27/32,** B 32 B 27/18,
B 32 B 27/16

(21) Anmeldenummer: 84110156.1

(22) Anmeldetag: 25.08.84

(54) Siegelbare Mehrschichtfolie für Verpackungszwecke.

(30) Priorität: 05.09.83 DE 3331983
31.01.84 DE 3403153

(43) Veröffentlichungstag der Anmeldung:
27.03.85 Patentblatt 85/13

(45) Bekanntmachung des Hinweises auf die Patenterteilung:
14.10.87 Patentblatt 87/42

(84) Benannte Vertragsstaaten:
BE DE FR GB IT NL

(56) Entgegenhaltungen:
EP-A-0 027 586
EP-A-0 114 311
FR-A-1 377 114
FR-A-2 361 225
FR-A-2 438 601

(73) Patentinhaber: HOECHST AKTIENGESELLSCHAFT,
Postfach 80 03 20, D-6230 Frankfurt am Main 80
(DE)

(72) Erfinder: Crass, Günther, Bachstrasse 7, D-6204
Taunusstein 4 (DE)
Erfinder: Bothe, Lothar, Dr., Am Heiligenhaus 9,
D-6500 Mainz- Gonsenheim (DE)
Erfinder: Janocha, Siegfried, Dr., Am Hohen Stein
6, D-6200 Wiesbaden (DE)
Erfinder: Dietz, Wolfgang, Dr., Rotenbühler Weg
25, D-6600 Saarbrücken (DE)

EP 0 135 178 B1

# 0 135 178

## Beschreibung

Die Erfindung betrifft eine siegelbare transparente polyolefinische Mehrschichtfolie, bestehend aus einer Basisschicht aus einem Propylenpolymeren und mindestens einer siegelbaren Schicht, die eine Kombination aus einem Alpha-Olefin-Copolymerisat, einem damit verträglichen Harz, einem Polydiorganosiloxan und einem Silikat enthält.

Aus der deutschen Offenlegungsschrift 16 94 694 sind heißsiegelbare Schichtstoffe bekannt, die aus einer orientierten Polypropylenfolie bestehen, die mindestens eine heißsiegelfähige Schicht aus einem Ethylen-Propylen-Copolymeren aus 2 bis 6 Gew.-% Ethylen und 98 bis 94 Gew.-% Propylen enthält. Diese Folien besitzen zwar eine gute Heißsiegelbarkeit, jedoch sind sie nicht im erwunschten Maße klar und kratzfest und zeigen zudem ungenügende Verarbeitungseigenschaften auf schnellaufenden Verpackungsmaschinen.

Aus der europäischen Patentschrift 27 586 sind siegelbare Polypropylenfolien bekannt, die eine Siegelschicht aus einem Ethylen-Homo- oder Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur deutschen Offenlegungsschrift 16 94 694 dar, besitzen aber noch eine unzureichende Laufsicherheit auf horizontalen Form-Füll-Schließ-Maschinen.

Aus der deutschen Offenlegungsschrift 29 41 140 ist ein Verpackungsmaterial bekannt, welches aus einer Grundschicht aus einem Polypropylenpolymerisat und aus einer Oberflächenschicht besteht, die aus einem Gemisch eines Propylen-Ethylen-Copolymerisats und eines $(C_4\text{-}C_{10})\text{-}\alpha\text{-}$Olefin-Propylen-Copolymerisats besteht. Diese Oberflächenschicht kann auch ein niedrigmolekulares thermoplastisches Harz sowie Silikonöle enthalten. Derartige Verpackungsmaterialien weisen den Nachteil auf, daß sie kratzempfindlich sind und noch unbefriedigende optische Eigenschaften besitzen.

In der FR-A-2 438 601 wird eine transparente Mehrschichtfolie bestehend aus einer Basisschicht und einer Siegelschicht beansprucht, wobei die Basisschicht A aus einem Propylenpolymeren und die Siegelschicht B aus einer Mischung eines Ethylen-Propylen-Copolymeren, eines Alpha-Olefin-Copolymeren mit 4 bis 10 C-Atomen und Propylen, einem damit verträglichen Kohlenwasserstoffharz und einem Polydiorganosiloxan besteht und als Gleitmittel langkettige Amine, Silikate, Calciumcarbonat u.a. enthält.

In der EP-A-0 114 311 (Prioritätstag: 24.12.82, Anmeldetag: 16.12.83, Veröffentlichungstag: 01.08.84) wurde bereits eine - allerdings opake - Folie vorgeschlagen, die Siegelschichten aus einem polyolefinischen Copolymeren bzw. Terpolymeren besonderer Zusammensetzung besitzt und durch Modifizierung mit einem Propylen-Homopolymeren, einem Dimethylpolysiloxan und einem synthetischen Harz neben guten Verarbeitungseigenschaften auf schnellaufenden Verpackungsmaschinen ein verbessertes optisches Aussehen und eine sehr gute Kratzfestigkeit aufweist. Die Bestandteile der Siegelschichten entsprechen denen, die als Komponenten a) bis d) auch erfindungsgemäß eingesetzt werden. Laut Anspruch 3 dieses Standes der Technik kann die Folie auch Additive wie Calciumcarbonat, Siliciumdioxid und/oder ein Na-Al-Silikat enthalten.

Die Folien nach diesem Stand der Technik erfüllen zwar die Anforderungen, die maschinentechnisch an eine Verpackungsfolie gestellt werden, jedoch ist ihre Handhabung durch die extrem glatten Oberflächen mit sehr geringen Reibungskoeffizienten mit erheblichen Problemen behaftet. So resultiert beim Schneiden dieser Folien von der Originalrollenbreite (4 - 6 m) auf kleinere Breiten ein erhöhter seitlicher Verlauf, d.h. die gewünschte Breite wird, bedingt durch ein seitliches Ausweichen der Folie bei den hohen Geschwindigkeiten, nicht exakt erzielt, sondern um ein mehr oder weniger hohes Maß überschritten. Im Zusammenhang mit dem Schneide- und Aufwickelvorgang soll im folgenden der Ausdruck "Konfektionierung" verwendet werden.

Ein weiterer Nachteil der vorstehend beschriebenen Folie ist in ihrer hohen Teleskopierneigung auf der Rolle bei der Handhabung entweder schon auf der Schneidemaschine oder aber beim Einlegen in die Verpackungsmaschine zu sehen. Unter dem Begriff des Teleskopierens ist eine seitliche Verschiebung der Folie auf der Rolle zu verstehen, bei der jeweils aufeinanderliegende Oberflächen nach einer Seite abgleiten, wodurch bewirkt wird, daß die Ränder der Folie nicht mehr exakt übereinanderliegen, sondern jeweils um eine geringe Strecke in eine Richtung versetzt sind, und die gesamte Rolle dadurch auf einer Seite ein mehr oder weniger großes Stück über den Wickelkern hinausragt. Das Teleskopieren tritt normalerweise beim Anstoßen der Rollen oder bei geringen Schrägneigungen auf.

Bedingt durch diese Schwierigkeiten muß die Maschinengeschwindigkeit beim Konfektionieren auf ca. die Hälfte des Normalwertes gesenkt werden, die weitere Handhabung der Rollen ist mit äußerster Vorsicht durchzuführen.

Die vorliegende Erfindung hat sich deshalb die Aufgabe gestellt, eine siegelbare transparente polyolefinische Mehrschichtfolie zu schaffen mit guten Verarbeitungseigenschaften auf schnellaufenden Verpackungsmaschinen, die gleichzeitig eine gute Konfektionierbarkeit sowie keine Teleskopierneigung zeigt und dennoch die Anforderungen in Bezug auf die optischen Eigenschaften und die Kratzfestigkeit erfüllt.

Erfindungsgemäß wird diese Aufgabe gelöst durch eine siegelbare, transparente, polyolefinische Mehrschichtfolie der eingangs genannten Art mit mindestens einer Siegelschicht aus:

a) 67,5 bis 89,6 Gew.-%, bezogen auf die siegelbare Schicht, wenigstens eines Co- oder Terpolymeren aus $\alpha$-Olefinen mit 2 bis 10 C-Atomen oder Mischungen daraus, z. B. Ethylen, Propylen oder Butylen.

b) 5 bis 15 Gew.-%, bezogen auf die siegelbare Schicht eines niedrigmolekularen, mit dem Co- oder Terpolymeren verträglichen Harzes,

c) 5 bis 15 Gew.-%, bezogen auf die siegelbare Schicht, eines Propylenhomopolymeren,

2

d) 0,3 bis 1,5 Gew.-%, bezogen auf die siegelbare Schicht, eines Polydiorganosiloxans und

e) 0,1 bis 1,0 Gew.-%, bezogen auf die siegelbare Schicht, eines Silikates mit blattförmiger Struktur.

Die Basisschicht der siegelbaren polyolefinischen Mehrschichtfolie besteht aus einem Propylenpolymeren, das zum überwiegenden Teil aus Propylen besteht und einen Schmelzpunkt von 140°C oder höher, vorzugsweise einen Schmelzpunkt von 150°C oder höher, besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit $(C_4-C_8)$-$\alpha$-Olefiner mit einem $(C_4-C_8)$-$\alpha$-Olefingehalt von 10 Gew.-% oder weniger stellen spezielle Beispiele für das Propylenpolymere der Basisschicht dar.

Das Propylenpolymere der Basisschicht hat zweckmäßig einen Schmelzflußindex von 0,5 g/10 min bis 8 g/10 min bei 230°C und 2,16 kp Belastung (DIN 53735), insbesondere von 1,5 g/10 min bis 4 g/10 min.

Die Basisschicht aus dem Propylenpolymeren kann zusätzlich übliche Zusatzmittel, wie z. B. Antistatika, Gleitmittel und Stabilisatoren, enthalten.

Die in der Siegelschicht der erfindungsgemäßen Mehrschichtfolie enthaltenen Co- oder Terpolymeren bestehen aus Ethylen, Propylen, Butylen oder weiteren $\alpha$-Olefinen mit bis zu 10 C-Atomen oder auch aus Mischungen daraus. Die Zusammensetzung ist so wie sie üblicherweise für Siegelschichten verwendet wird. Gewöhnlich kommt dafür ein Copolymeres aus Ethylen und Propylen mit einem Ethylengehalt zwischen 3 und 10 Gew.-% zur Anwendung, es können aber genauso auch Copolymere aus Ethylen und Butylen oder Mischungen aus Ethylen-Butylen-Copolymeren mit Ethylen-Propylen-Butylen-Terpolymeren verwendet werden. Der Schmelzpunkt derartiger Harze liegt bei 130°C oder höher, der Schmelzflußindex im Bereich zwischen 0,1 und 16 g/10 min bei 230°C und 2,16 kg Belastung (DIN 53735).

Bei dem erfindungsgemäß eingesetzten niedrigmolekularen, mit dem Co- oder Terpolymeren verträglichen Harz handelt es sich um ein natürliches oder synthetisches Harz. Das Harz hat einen Erweichungspunkt von 60 bis 180°C (bestimmt nach DIN 1995-U4), bevorzugt von 80 bis 130°C.

Unter verträglichen Harzen sind solche Harze zu verstehen, die, wenn sie als solche in einer Konzentration von bis zu 15 Gew.-% des Co- oder Terpolymeren der Siegelschicht zugemischt werden, keine Verschlechterung der Klarheit der Folie bewirken.

Als Beispiel für geeignete niedrigmolekulare, mit dem Co- oder Terpolymeren verträgliche thermoplastische Harze sind zu nennen Kohlenwasserstoffharze, Ketonharze, Polyamidharze, Kolophonium, Dammarharze, chlorierte aliphatische und aromatische Kohlenwasserstoffharze. Diese Harze werden in Ullmann, Encyclopädie der technischen Chemie, Band 12, 1976, Seiten 525 bis 555, beschrieben.

Unter "Kohlenwasserstoffharzen" sind Polymerisate, die vornehmlich aus Kohlenstoff und Wasserstoff bestehen, zu verstehen, deren Bestandteil beispielsweise aus Koksofen, gas Kohlenteerdestillaten, bei Crackprozessen von Naphtha bzw. Gasöl und aus Terpentinöl gewonnen werden können. Als wesentliche Vertreter der Kohlenwasserstoffharze sind die Petroleumharze, die Harze aus Steinkohlenteer sowie die Terpentinharze zu nennen. Typische Beispiele der Kohlenwasserstoffharze stellen Cumaronharze, Erdölharze und Terpenharze dar. Diese Harze werden in obengenanntem Buch auf den Seiten 539 bis 546 beschrieben.

Cumaronharze werden meist durch Polymerisation von entphenolten und entbasten Fraktionen des Steinkohlenteerleichtöls, die beispielsweise Inden, Styrol, Dicyclopentadien und Cumaron und deren Homologe als ungesättigte Inhaltsstoffe enthalten, gewonnen. Durch Copolymerisation mit Phenol und Kombination mit anderen Kunststoffen ist eine vielseitige Modifikation möglich. Diese Harze werden in obengenanntem Buch auf den Seiten 545 bis 546 beschrieben.

Die Rohstoffbasis der Erdölharze wird bei der Crackung von Naphtha oder Gasöl auf Rohstoffe der chemischen Industrie, wie Ethylen, Propylen, gewonnen. Es handelt sich beispielsweise um harzbildende Verbindungen, wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol, Methylstyrol. Diese Harze werden in obengenanntem Buch auf den Seiten 541 bis 542 beschrieben.

Bei Terpenharzen handelt es sich um Polymerisate von Terpenen. Als Beispiele für geeignete Terpene sind $\beta$-Pinen, Dipenten, Limonen, Myrcen, Bornylen, Camphen und ähnliche Terpene zu nennen. Diese Harze sind in obengenanntem Buch auf den Seiten 542 bis 543 beschrieben.

Hervorzuheben ist, daß die Kohlenwasserstoffe durch Reaktion der Rohstoffe vor der Polymerisation, durch Einführung spezieller Monomerer oder durch Reaktion des polymerisierten Produktes modifiziert werden können. Besonders hervorzuheben ist hierbei die Hydrierung oder Teilhydrierung ungesättigter Bestandteile der Harze. Möglichkeiten der Modifizierung von Kohlenwasserstoffharzen sind in obengenanntem Buch auf den Seiten 543 bis 544 beschrieben.

Bei Kolophonium handelt es sich um natürliche Harze, die durch Abdestillieren von Terpentinöl aus einem durch Lebendharzung von verschiedenen Kiefernarten gewonnenen Terpentinbalsam (Balsamharze), durch Lösungsmittelextraktion alter Wurzelstöcke (Wurzelharze) und/oder durch fraktionierte Destillation von Tallöl (Tallharze) erhalten werden. Außerdem sollen darunter Kolophoniumester sowie modifiziertes Kolophonium (z. B. hydriertes, dehydriertes, fraktioniertes, isomerisiertes und disproportioniertes Kolophonium) und ähnliche Substanzen verstanden werden. Kolophonium wird in obengenanntem Buch auf den Seiten 529 bis 536 beschrieben.

Kondensatharze entstehen durch Säure-katalysierte Kondensation von Erdölfraktionen mit Aldehyden. Typische Vertreter sind Xylol-Formaldehyd-Harze und Naphthalin-Formaldehyd-Harze. Kondensationsharze werden in obengenanntem Buch auf Seite 542 beschrieben.

3

Dammarharze werden durch Lebendharzung von Bäumen der Familie Dipterocarpaicae gewonnen. Diese Harze sind im obengenannten Buch auf Seite 527 beschrieben.

Die Untergrenze von 5 Gew.-%, bezogen auf die siegelbare Schicht, des niedermolekularen, mit dem Co- oder Terpolymeren verträglichen Harzes sollte nicht unterschritten werden, da erst bei höheren Anteilen die Auswirkung des Harzzusatzes auf die optischen Eigenschaften und die Kratzempfindlichkeit in Erscheinung tritt.

Mehr als 15 Gew.-%, bezogen auf die siegelbare Schicht, an niedermolekularem, mit dem Co- oder Terpolymeren verträglichem Harz haben sich aus verfahrenstechnischen Gründen als unzweckmäßig erwiesen.

Das als Komponente c) der Siegelschicht eingesetzte Propylenhomopolymer sollte eine Schmelztemperatur, die oberhalb der Schmelztemperatur der Komponente a) liegt, besitzen. Bei Zusätzen von weniger als 5 Gew.-% an Propylenhomopolymeren ergeben sich nur geringfügige Verbesserungen der optischen Eigenschaften sowie der Kratzfestigkeit und noch nicht ausreichende Verbesserungen der Maschinengängigkeit an schnellaufenden Verpackungsmaschinen. Zusätze von mehr als 15 Gew.-% würden zwar die optischen Eigenschaften, die Kratzfestigkeit und die Maschinengängigkeit weiter verbessern, jedoch tritt dann eine merkliche Verschlechterung der Siegeleigenschaften ein.

Erfindungsgemäß müssen Polydiorganosiloxane oder deren Mischungen eingesetzt werden, die bei 25°C eine Viskosität von mindestens 100 mm²/s aufweisen. Als Beispiele für geeignete Polydiorganosiloxane sind Polydialkylsiloxane, Polyalkylphenylsiloxane, olefinmodifizierte Siloxanöle, polyethermodifizierte Siliconöle, olefin/polyethermodifizierte Silikonöle, epoxymodifizierte Silikonöle und alkoholmodifizierte Silikonöle, Polydialkylsiloxane mit vorzugsweise $C_1$ bis $C_4$ in der Alkylgruppe, insbesondere Polydimethylsiloxane, hervorzuheben.

In einer besonderen Ausführungsform der Erfindung, nämlich wenn die polyolefinische Mehrschichtfolie bedruckbar sein soll, wird die Oberfläche der siegelbaren Schicht einer Coronaentladung ausgesetzt. In diesem Fall wird als Komponente d) ein Poly-methyl-phenyl-siloxan eingesetzt, welches sich von dem Polydimethylsiloxan dadurch unterscheidet, daß 30 bis 70 %, bevorzugt 40 bis 60 %, der im Polydimethylsiloxan enthaltenen Methylgruppen durch Phenylgruppen ersetzt sind. Das Polydimethylsiloxan hat die Eigenschaft, daß es unter dem Einfluß der Coronabehandlung Vernetzungsreaktionen eingeht, wodurch die Siegeleigenschaften der Siegelschicht verlorengehen. Diese Reaktionen geht das Poly-methyl-phenyl-siloxan nicht ein, und damit bleiben die Siegeleigenschaften in vollem Umfang erhalten.

Das Poly-methyl-phenyl-siloxan weist eine kinematische Viskosität von mindestens 100 mm²/s bei 25°C auf.

Weniger als 0,3 Gew.-%, bezogen auf die siegelbare Schicht, an Polydiorganosiloxan sollten als Komponente d) nicht enthalten sein, da dies bei der beschriebenen Rohstoffkombination noch zu erhöhten Aussortierungen an den schnellaufenden Verpackungsmaschinen führt, während größere Mengen als 1,5 Gew.-%, bezogen auf die siegelbare Schicht, an Polydiorganosiloxan zu verfahrenstechnischen Schwierigkeiten bei der Folienherstellung und zu Fehleinschlägen in den Verpackungsmaschinen infolge zu geringer Reibung führen.

Eine Ausrüstung der siegelbaren Schicht mit üblichen Additiven, wie z. B. Gleitmittel, Antistatika und Stabilisatoren, ist möglich.

Als geeignete Komponente e) haben sich Aluminiumsilikate mit blattförmiger Struktur erwiesen. Diese richten sich bei der biaxialen Orientierung der Folie vorwiegend waagerecht zur Folienebene aus und wirken somit nicht abrasiv.

Besonders günstig sind solche mit einem mittleren Durchmesser von 0,1 - 1,0 µm.

Pigmente mit kugelähnlicher bzw. nadelförmiger Struktur, wie z. B. $SiO_2$- bzw. $CaCO_3$-Typen, haben sich als ungeeignet erwiesen. Diese führen zu stark erhöhter Kratzempfindlichkeit, Verschlechterung der optischen Eigenschaften und bei größerem Durchmesser ebenfalls zur Verschlechterung des Verarbeitungsverhaltens an schnellaufenden Verpackungsmaschinen.

Die Coronabehandlung wird nach der üblicherweise durchgeführten Methode ausgeführt, bei der die Folie zwischen zwei als Elektroden dienenden Leiterelementen hindurchgeführt wird, wobei zwischen den Elektroden eine so hohe Spannung, meist Wechselspannung, anliegt, daß Sprüh- oder Coronaentladungen stattfinden können. Durch diese Sprüh- oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen, wodurch die Bedruckbarkeit der Folie verbessert wird.

Die Dicke der Siegelschicht(en) sollte weniger als 3 µm, insbesondere weniger als 1 µm betragen, da sich bei größeren Schichtdicken das Verarbeitungsverhalten auf schnellaufenden Verpackungsmaschinen wieder verschlechtert. Bevorzugt besitzt die biaxial gereckte Mehrschichtfolie eine Dicke von 10 - 50 µm, besonders bevorzugt von 15 - 35 µm.

Sofern nicht ausdrücklich angegeben, wurden die einzelnen Daten nach folgenden Methoden ermittelt:

Schmelzflußindex - DIN 53735 bei 230°C und 21,19 N Belastung

Erweichungspunkt - DIN 1995-U4

Schmelzpunkt - DSC-Messung, Maximum der Schmelzkurve, Aufheizgeschwindigkeit 20°C/min.

**Trübung:**

Die Trübung der Folie wird in Anlehnung an ASTM-D 1003-52 gemessen wobei an Stelle einer 4°-Lochblende eine 1°-Spaltblende eingesetzt wird und die Trübung in Prozent für vier übereinanderliegende Folienlagen angegeben wird. Die vier Lagen wurden gewählt, da man hierdurch im optimalen Meßbereich liegt.

**Glanz:**

Der Glanz wird mit einem Reflektometer, Typ RGN® 10.01.02 nach Dr. Schwarzau, Berlin, mit einer planen, polierten schwarzen Glasplatte als Standard gemessen.

**Kratzfestigkeit bzw. Kratzempfindlichkeit:**

Die Kratzfestigkeit wird in Anlehnung an DIN 53754 bestimmt.

Für die Bestimmung der Kratzfestigkeit wird das Abriebmeßgerät Taber Model 503 Abraser® der Fa. Teledyne Taber benutzt, wobei Reibräder der Marke Calibrade® H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers.

**Beispiele**

Mit Hilfe des Koextrusionsverfahrens wurden jeweils aus einer Breitschlitzdüse von 280 mm Breite und 1,8 mm Spalthöhe bei einer Extrusionstemperatur von 260°C und einer Fördermenge von 70 kg/h als Summe 1 mm dicke Mehrschichtfolien extrudiert, deren Basis aus Polypropylen mit einem Schmelzflußindex von 2 g/10 min und den verschiedenen beiden Außenschichten bestanden. Diese Folien wurden nach Durchlaufen einer 20 mm langen Luftstrecke auf einer 30°C warmen Kühlwalze des Durchmessers 600 mm abgeschreckt, die mit einer Umfangsgeschwindigkeit von 4,5 m/min lief. Danach wurden die Folien von der Kühlwalze auf ein Walzentrio von ebenfalls 30°C und einer Umfangsgeschwindigkeit von ebenfalls 4,5 m/min übergeben und dann nach Erwärmung auf 130°C von einem weiteren Walzentrio um den Faktor 5 längsgestreckt. Anschließend wurden sie bei 175°C Lufttemperatur um das 10-fache in Querrichtung verstreckt.

Die so gebildeten Mehrschichtfolien hatten eine Basisschicht aus Polypropylen der Dicke ca. 19 μm und auf jeder Seite eine Siegelschicht der Dicke 0,5 bis 0,8 μm.

In der Tabelle sind die Eigenschaften der verschiedenen hergestellten Mehrschichtenfolien zusammengestellt.

**Vergleichsbeispiel 1**

Die Siegelschichten bestanden aus

a) 79,3 Gew.-%, bezogen auf die Siegelschicht, eines statistischen Copolymeren aus Ethylen und Propylen mit einem Ethylengehalt von 4,5 Gew.-%, bezogen auf die Menge des Copolymeren,

b) 10 Gew.-%, bezogen auf die Siegelschicht, von Arkon® P 125, einem hydrierten Kohlenwasserstoffharz mit einem Erweichungspunkt von 125°C,

c) 10 Gew.-% bezogen auf die Siegelschicht, eines Propylen-Polymers mit einem Schmelzpunkt von 162°C (Hostalen® PPN 1060 F 1),

d) 0,7 Gew.-%, bezogen auf die Siegelschicht, an Polydimethylsiloxan einer kinematischen Viskosität von 30 000 mm²/s bei 25°C.

**Vergleichsbeispiel 2**

Vergleichsbeispiel 1 wurde wiederholt, jedoch wurden zusätzlich

e) 0,5 Gew.-%, bezogen auf die Siegelschicht, eines kugelförmigen $SiO_2$-Pigments mit einem mittleren Teilchendurchmesser von 1,0 μm

zugesetzt.

**Beispiel 1**

Vergleichsbeispiel 2 wurde wiederholt, jedoch wurden anstelle des kugelförmigen $SiO_2$ 0,5 Gew.-%, bezogen auf die Siegelschicht, eines blattförmigen Aluminiumsilikats mit einem mittleren Teilchendurchmesser von 0,5 - 0,6 µm zugesetzt.

Die Überlegenheit der erfindungsgemäßen Folie entsprechend Beispiel 1 geht aus der Tabelle 1 deutlich hervor.

Die Vergleichsbeispiele 1 und 2 zeigen zwar bei einzelnen Punkten jeweils gute Eigenschaften, erreichen jedoch nicht alle Anforderungen, wie gute Optik, gute Kratzfestigkeit, gute Maschinengängigkeit an Verpackungsmaschinen sowie gutes Konfektionierungsverhalten ohne Teleskopierneigung gleichzeitig.

**Tabelle 1:** Folieneigenschaften

| Beispiel | Glanz (%) $\frac{S1+S2}{2}$ | Trübung (%) 4-lagig | KE (%) $\frac{S1+S2}{2}$ | Maschinengängigkeit an der Verpackungs-maschine | Maschinengängigkeit beim Konfektionieren und Handling |
|---|---|---|---|---|---|
| Beispiel 1 | 169 | 21 | 25 | + + | + + |
| Vergleichsbeispiel 1 | 170 | 19 | 24 | + + | - - |
| Vergleichsbeispiel 2 | 155 | 29 | 45 | + - | + + |

S = Seite
KE = Kratzempfindlichkeit

+ + = sehr gut
+ = gut
+ - = ausreichend
- = mangelhaft
- - = ungenügend

**Beispiel 2**

Es wurde eine Folie wie in Beispiel 1 hergestellt, jedoch enthielt die Siegelschicht anstelle des als Komponente d) zugesetzten Polydimethylsiloxans 0,7 Gew.-%, bezogen auf die Siegelschicht, an Poly-methyl-phenyl-siloxan einer kinematischen Viskosität von 1.000 $mm^2/s$ bei 25°C. Die Folie wurde dann einseitig einer Coronabehandlung ausgesetzt (Primärspannung 200 V, Stromstärke 0,5 A).

**Vergleichsbeispiel 3**

Die Folie nach Vergleichsbeispiel 1 wurde einseitig einer Coronabehandlung ausgesetzt (wie die Folie nach Beispiel 2).

Wertung: Beide Folien zeigten eine gute Bedruckbarkeit. Wie aus der Tabelle 2 ersichtlich ist, ist die Folie nach Vergleichsbeispiel 3 bezüglich der Qualität ihrer Siegeleigenschaften deutlich schlechter.

**Tabelle 2**

| | Beispiel 2 | Vergleichsbeispiel 3 |
|---|---|---|
| Glanz (%) $\frac{S1+S2}{2}$ | 165 | 169 |
| Trübung (%) 4-lagig | 22 | 21 |
| KE (%) $\frac{S1+S2}{2}$ | 25 | 25 |
| Maschinengängigkeit an der Verpackungsmaschine | + + | + + |
| Maschinengängigkeit beim Konfektionieren und Handling | + + | + + |
| Minimale Siegeltemperatur (°C) für Siegelfestigkeit von 0,5 N/15 mm Folienbreite, coronabehandelte Folienoberfläche | 124 | 150 |
| Minimale Siegeltemperatur (°C) für Siegelfestigkeit von 0,5 N/15 mm Folienbreite, unbehandelte Folienoberfläche | 122 | 122 |

S = Seite
KE = Kratzempfindlichkeit

+ + = sehr gut

**Patentansprüche**

1. Siegelbare transparente polyolefinische Mehrschichtfolie, bestehend aus einer Basisschicht aus einem Propylenpolymeren und mindestens einer siegelbaren Schicht, enthaltend eine Kombination aus einem Alpha-Olefin-Copolymerisat, einem damit verträglichen Harz, einem Polydiorganosiloxan und einem Silikat, dadurch gekennzeichnet, daß die Siegelschicht aus einer Kombination von

a) 67,5 bis 89,6 Gew.-%, bezogen auf die siegelbare Schicht, wenigstens eines Co- oder Terpolymeren aus alpha-Olefinen mit 2 bis 10 C-Atomen oder Mischungen daraus,

b) 5 bis 15 Gew.-%, bezogen auf die siegelbare Schicht, eines niedrigmolekularen, mit dem Co- oder Terpolymeren verträglichen Harzes,

c) 5 bis 15 Gew.-% bezogen auf die siegelbare Schicht, eines Propylenhomopolymeren

d) 0,3 bis 1,5 Gew.-%, bezogen auf die siegelbare Schicht, eines Polydiorganosiloxans und

e) 0,1 bis 1,0 Gew.-%, bezogen auf die siegelbare Schicht, eines Silikats mit blattförmiger Struktur

besteht.

2. Mehrschichtfolie nach Anspruch 1, dadurch gekennzeichnet, daß als Komponente b) der siegelbaren Schicht ein niedrigmolekulares Harz aus der Gruppe der Kohlenwasserstoffharze, Ketonharze, Polyamidharze, Kolophoniumharze, Dammarharze, chlorierten aliphatischen und aromatischen Harze enthalten ist.

3. Mehrschichtfolie nach Anspruch 1, dadurch gekennzeichnet, daß als Komponente d) der siegelbaren Schicht ein Polydiorganosiloxan einer kinematischen Viskosität von mindestens 100 mm2/s bei 25°C enthalten ist.

4. Mehrschichtfolie nach Anspruch 1, dadurch gekennzeichnet, daß als Komponente e) ein blattförmiges Silikat mit einen mittleren Teilchendurchmesser von 0,1 bis 3,0, insbesondere 0,2 bis 1,5 µm enthalten ist.

5. Mehrschichtfolie nach Anspruch 1, dadurch gekennzeichnet, daß als Komponente d) der siegelbaren Schicht ein Poly-methyl-phenyl-siloxan mit einer kinematischen Viskosität von mindestens 100 mm2/s bei 25°C enthalten ist und daß die Folie zur Verbesserung der Bedruckbarkeit coronabehandelt ist.

6. Mehrschichtfolie nach einem der Ansprüche 1 bis 5, dadurch gekennzeichnet, daß die Mehrschichtfolie biaxial gestreckt worden ist und eine Dicke von 10 bis 50 µm, vorzugsweise von 15 bis 35 µm, besitzt.

7. Mehrschichtfolie nach einem der Ansprüche 1 bis 6, dadurch gekennzeichnet, daß die Siegelschichtdicke kleiner als 3 µm, vorzugsweise kleiner als 1 µm, ist.

8. Verwendung der Mehrschichtfolie nach einem der Ansprüche 1 bis 7 als Verpackungsfolie auf schnellaufenden Einschlagmaschinen.

**Claims**

1. Sealable transparent polyolefinic multilayer film comprising a base layer formed of a propylene polymer and at least one sealable layer, which contains a combination of an alpha-olefin copolymer, a resin compatible therewith, a polydiorganosiloxane and a silicate, characterized in that said sealing layer is composed of a combination of:

a) 67.5 to 89.6 % by weight, relative to the weight of the sealable layer, of at least one co- or terpolymer of alpha-olefins having 2 to 10 carbon atoms or of mixtures thereof,

b) 5 to 15 % by weight, relative to the weight of the sealable layer, of a low molecular weight resin which is compatible with the co- or terpolymer,

c) 5 to 15 % by weight, relative to the weight of the sealable layer, of a propylene homopolymer,

d) 0.3 to 1.5 % by weight, relative to the weight of the sealable layer, of a polydiorganosiloxane, and

e) 0.1 to 1.0 % by weight, relative to the weight of the sealable layer, of silicate having the shape of platelets.

2. Multilayer film as claimed in Claim 1, wherein component b) of the sealable layer is a low molecular-weight resin selected from the group including hydrocarbon resins, ketone resins, polyamide resins, colophony resins, dammar resins, and chlorinated aliphatic and aromatic resins.

3. Multilayer film as claimed in Claim 1, wherein component d) of the sealable layer is a polydiorganosiloxane having a kinematic viscosity of at least 100 mm2/s at 25°C.

4. Multilayer film as claimed in Claim 1, wherein component e) is a silicate having the shape of platelets, with a mean particle diameter from 0.1 to 3.0 µm, in particular from 0.2 to 1.5 µm.

5. Multilayer film as claimed in Claim 1, wherein component d) of the sealable layer is a polymethyl-phenyl siloxane having a kinematic viscosity of at least 100 mm2/s at 25°C, and wherein the film has been subjected to a corona treatment to improve its printability.

6. Multilayer film as claimed in any of Claims 1 to 5, wherein the multilayer film has been biaxially oriented and has a thickness of 10 to 50 µm, preferably of 15 to 35 µm.

7. Multilayer film as claimed in any of Claims 1 to 6, wherein the thickness of the sealing layer is lower than 3 µm, preferably lower than 1 µm.

8. Use of the multilayer film as claimed in any of Claims 1 to 7, as a packaging film on high-speed wrapping machines.

## Revendications

1. Feuille multicouches polyoléfinique transparente soudable, composée d'une couche de base en un polymère à base de propylène et d'au moins une couche soudable contenant une combinaison d'un copolymère d'alpha-oléfines, d'une résine compatible avec celui-ci, d'un polydiorganosiloxane et d'un silicate, caractérisée en ce que la couche de soudage est constituée d'une combinaison de

a) 67,5 à 89,6 % en poids, par rapport à la couche soudable, d'au moins un co- ou terpolymère d'α-oléfines ayant de 2 à 10 atomes de carbone, ou de mélanges de ceux-ci,

b) 5 à 15 % en poids, par rapport à la couche soudable, d'une résine à faible poids moléculaire, compatible avec le co- ou terpolymère,

c) 5 à 15 % en poids, par rapport à la couche soudable, d'un homopolymère de propylène,

d) 0,3 à 1,5 % en poids, par rapport à la couche soudable, d'un polydiorganosiloxane, et

e) 0,1 à 1,0 % en poids, par rapport à la couche soudable, d'un silicate à structure lamellaire.

2. Feuille multicouches selon la revendication 1, caractérisée en ce qu'elle contient, en tant que composant b) de la couche soudable, une résine à faible poids moléculaire choisie parmi les résines hydrocarbonées, résines cétoniques, résines polyamide, résines de type colophane, résines dammar, résines aliphatiques et aromatiques chlorées.

3. Feuille multicouches selon la revendication 1, caractérisée en ce qu'elle contient, en tant que composant d) de la couche soudable, un polydiorganosiloxane ayant une viscosité cinématique d'au moins 100 mm$^2$/s à 25°C.

4. Feuille multicouches selon la revendication 1, caractérisée en ce qu'elle contient, en tant que composant e), un silicate lamellaire ayant un diamètre moyen de particules de 0,1 à 3,0, en particulier de 0,2 à 1,5 µm.

5. Feuille multicouches selon la revendication 1, caractérisée en ce qu'elle contient, en tant que composant d) de la couche soudable, un polyméthylphénylsiloxane ayant une viscosité cinématique d'au moins 100 mm$^2$/s à 25°C, et en ce que la feuille est traitée par effet couronne, pour l'amélioration de l'imprimabilité.

6. Feuille multicouches selon l'une des revendications 1 à 5, caractérisée en ce que la feuille multicouches a été étirée biaxialement et a une épaisseur de 10 à 50 µm, de préférence de 15 à 35 µm.

7. Feuille multicouches selon l'une des revendications 1 à 6, caractérisée en ce que l'épaisseur de la couche de soudage est inférieure à 3 µm, de préférence inférieure à 1 µm.

8. Utilisation de la feuille multicouches selon l'une des revendications 1 à 7, en tant que feuille d'emballage sur des machines d'emballage à grande vitesse.